# EUROPÄISCHE PATENTANMELDUNG

(11) **EP 3 095 809 A1**
(43) Veröffentlichungstag der Anmeldung: **23.11.2016**
(21) Anmeldenummer: 15168558.3
(22) Anmeldetag: 21.05.2015
(51) Int. Cl.: C08J 9/00, C08J 9/06, C08L 101/10

(54) **SCHÄUMBARE, DÄMMSCHICHTBILDENDE MEHRKOMPONENTEN-ZUSAMMENSETZUNG UND DEREN VERWENDUNG**

(71) Anmelder: HILTI Aktiengesellschaft, 9494 Schaan (LI)
(72) Erfinder: Marauska, Juliane, 72766 Reutlingen (DE); Paetow, Mario, 86859 Igling (DE); Jeromenok, Jekaterina, 86153 Augsburg (DE)
(74) Vertreter: Hilti Aktiengesellschaft Corporate Intellectual Property

(57) **Zusammenfassung**

Es wird eine schäumbare, dämmschichtbildende Mehrkomponenten-Zusammensetzung mit mindestens einem alkoxysilanfunktionellen Polymer, welches terminiert und/oder als Seitengruppen entlang der Polymerkette alkoxyfunktionelle Silangruppen der allgemeinen Formel (I) aufweist -Si(R¹)ₘ(OR²)₃₋ₘ (I), worin R¹ für einen linearen oder verzweigten C₁-C₁₆-Alkylrest, R² für einen linearen oder verzweigten C₁-C₆-Alkylrest und m für eine ganze Zahl von 0 bis 2 steht, mit mindestens einem dämmschichtbildenden Brandschutzadditiv, mit einer Treibmittelmischung und mit einem Vernetzungsmittel, sowie deren Verwendung als Ortschaum oder zur Herstellung von Formkörpern beschrieben.

## Beschreibung

Die vorliegende Erfindung betrifft eine schäumbare, dämmschichtbildende Mehrkomponenten-Zusammensetzung und deren Verwendung.

Als Bindemittel für Montage-, Isolierungs- und Brandschutzschäume werden oft Polyurethane verwendet. Diese können z.B. als 1K-, 2K-Aerosoldose oder als 2K-Kartuschenschaum ausgebracht werden. Im ersten Fall braucht das System hohe Luftfeuchtigkeit, um auszuhärten. In den letzteren beiden Fällen wird die Aushärtung über die Polyol/Wasser-Komponente erreicht. Die Härterkomponente, das Isocyanat, gilt seit längerer Zeit als Risikostoff. Stoffmischungen, die mehr als 1% freies MDI enthalten, müssen mit "krebserzeugend Kategorie 3; H351" gekennzeichnet werden. Insbesondere für Ortschäume, die vom Verbraucher vor Ort ausgebracht werden, wäre es sehr vorteilhaft, wenn die Stoffe, mit denen man in Kontakt kommt, möglichst unbedenklich wären.

Ein Lösungsansatz hierfür sind die sogenannten "low-MDI-Schäume", bei denen Isocyanatpräpolymere mit einem Isocyanatgehalt von z.B. weniger als 1% oder sogar 0,1% eingesetzt werden, wie dies beispielsweise in der DE 102010038355 A1 oder der DE 10357093 A1 beschrieben ist.

Ein anderer Lösungsansatz basiert auf der Verwendung von "modifizierten Silanen" (auch STP, silane-terminated polymer). Diese Polymere, die oft ein Polyurethan- oder Polyether-Gerüst haben, härten über Hydrolyse und Polykondensationsreaktion der Alkoxysilylgruppen aus. Derartige Schäume sind als Isolierungsschäume in Druckdosen kommerziell erhältlich. Die Dosenschäume werden im Allgemeinen über ein physikalisches Treibmittel aufgeschäumt. Solche Systeme sind beispielsweise aus der WO 2000/004069 A1, der US 2006/189705 A, der WO 2013/107744 A1 oder der WO 2013/045422 A1 bekannt.

Nachteilig für die Brandeigenschaften bei Dosenschäumen, die mit physikalischen Treibmitteln arbeiten, die auch gleichzeitig als Lösemittel der Präpolymere dienen, ist, dass nur geringere Dichten erreichbar sind. Um stabile Aschen im Feuerfall zu generieren, werden im Allgemeinen Dichten von größer 100g/l benötigt, die mit herkömmlichen Dosenschäumen kaum erreichbar sind. Weiterhin nachteilig ist die stark begrenzte Verwendbarkeit von Füllstoffen, die für gute Brandschutzeigenschaften nötig sind, aus der Dose, weil hier das Absetzverhalten, die Ventilgängigkeit und die Lagerstabilitäten mit den Präpolymeren problematisch sind. Nachteilig ist auch das Nachschäumen nach dem Ausbringen des Schaums aus der Dose, weil der Schaum mit Luftfeuchtigkeit weiterreagiert. Nachdem die Dosenschäume durch Luftfeuchtigkeit Aushärten, verläuft die Aushärtung "in bulk" nur langsam oder gar unvollständig, d.h. normales Aushärten auf der Oberfläche, aber verlangsamtes Aushärten in der Tiefe, da dort die Feuchtigkeit fehlt.

Neben den einkomponentigen STP-Dosenschäumen sind auch Zwei- oder Mehrkomponenten-Systeme bekannt, etwa aus der EP 1829908 A1, der EP 2725044 A1 oder der WO 2014/064039 A1. Allerdings sind die bekannten STP-Dosenschäume und Zweikomponenten-Systeme keine Brandschutzschäume und enthalten keine Brandschutzadditive.

Der Erfindung liegt die Aufgabe zugrunde, Schäume, insbesondere Ortsschäume bereitzustellen, welche die genannten Nachteile der bekannten Systeme nicht aufweisen und welche für den Brandschutz geeignet sind.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine schäumbare, dämmschichtbildende Mehrkomponenten-Zusammensetzung mit mindestens einem alkoxysilanfunktionellen Polymer, welches terminiert und/oder als Seitengruppen entlang der Polymerkette alkoxyfunktionelle Silangruppen der allgemeinen Formel (I) aufweist

-Si(R¹)ₘ(OR²)₃₋ₘ (I),

worin R¹ für einen linearen oder verzweigten C₁-C₁₆-Alkylrest, R² für einen linearen oder verzweigten C₁-C₆-Alkylrest und m für eine ganze Zahl von 0 bis 2 steht, mit mindestens einem dämmschichtbildenden Brandschutzadditiv, mit einer Treibmittelmischung und mit einem Vernetzungsmittel.

Erfindungsgemäß sind die einzelnen Bestandteile der Treibmittelmischung vor der Verwendung der Zusammensetzung reaktionsinhibierend voneinander getrennt. Ferner ist das Vernetzungsmittel vor der Verwendung der Zusammensetzung reaktionsinhibierend von dem alkoxysilanfunktionellen Polymer getrennt, um eine Aushärtung des Polymers vor der Verwendung der Zusammensetzung zu verhindern.

Im Sinne der Erfindung ist ein Polymer ein Molekül mit sechs oder mehr Wiederholungseinheiten, das eine Struktur aufweisen kann, die linear, verzweigt, sternförmig, gewunden, hyperverzweigt oder vernetzt sein kann. Polymere können eine einzelne Art von Wiederholungseinheiten aufweisen ("Homopolymere") oder sie können mehr als eine Art von Wiederholungseinheiten aufweisen ("Copolymere"). Wie hierin verwendet, umfasst der Begriff *"Polymer"* sowohl Präpolymere, welche auch Oligomere mit 2 bis 5 Wiederholungseinheiten umfassen können, wie die als Bestandteil A eingesetzten alkoxysilanfunktionellen Verbindungen, welche in Gegenwart von Wasser unter Bildung von Si-O-Si-Bindungen miteinander reagieren, als auch die durch die eben genannte Reaktion gebildeten polymeren Verbindungen.

Zum besseren Verständnis der Erfindung werden die folgenden Erläuterungen der hierin verwendeten Terminologie als sinnvoll erachtet. Im Sinne der Erfindung:
- bedeutet *"chemische Intumeszenz"* die Bildung einer voluminösen, isolierenden Ascheschicht durch aufeinander abgestimmte Verbindungen, die bei Hitzeeinwirkung miteinander reagieren;
- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;
- bedeutet *"dämmschichtbildend",* dass im Brandfall ein fester mikroporöser Kohleschaum entsteht, so dass die gebildete feinporige und dicke Schaumschicht, die sogenannte Aschekruste, je nach Zusammensetzung ein Substrat gegen Hitze isoliert;
- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als "*Kohlenstoffgerüstbildner*" bezeichnet;
- ist ein *"Säurebildner"* eine Verbindung, die unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;
- ist ein *"Gasbildner"* eine Verbindung, die sich bei erhöhter Temperatur unter Entwicklung inerter, d.h. nicht-brennbarer Gase zersetzt und gegebenenfalls das erweichte Bindemittel zu einem Schaum aufbläht (Intumeszenz);
- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Gasbildner, oder der physikalischen Intumeszenz gebildet wird, stabilisiert.

Erfindungsgemäß umfasst das alkoxysilanfunktionelle Polymer ein Grundgerüst, das aus der Gruppe, bestehend aus einem Polyether, Polyester, Polyetherester, Polyamid, Polyurethan, Polyesterurethan, Polyetherurethan, Polyetheresterurethan, Polyamidurethan, Polyharnstoff, Polyamin, Polycarbonat, Polyvinylester, Polyacrylat, Polyolefin, wie Polyethylen oder Polypropylen, Polyisobutylen, Polysulfid, Kautschuk, Neopren, Phenolharz, Epoxidharz, Melamin ausgewählt ist. Das Grundgerüst kann dabei linear oder verzweigt (lineares Grundgerüst mit Seitenketten entlang der Kette des Grundgerüstes) aufgebaut sein und enthält terminierend, d.h. als Endgruppen eines linearen Grundgerüstes bzw. als Endgruppen des linearen Grundgerüstes und als Endgruppen der Seitengruppen, alkoxyfunktionelle Silangruppen, bevorzugt mindestens zwei alkoxyfunktionelle Silangruppen.

Die alkoxyfunktionelle Silangruppe hat die allgemeinen Formel (I)

-Si(R¹)ₘ(OR²)₃₋ₘ (I),

worin R¹ für einen linearen oder verzweigten C₁-C₁₆-Alkylrest, bevorzugt für einen Methyl- oder Ethylrest, R² für einen linearen oder verzweigten C₁-C₆-Alkylrest, bevorzugt für einen Methyl- oder Ethylrest, und m für eine ganze Zahl von 0 bis 2, bevorzugt 0 oder 1 steht. Am stärksten bevorzugt sind die mindestens zwei alkoxyfunktionellen Silangruppen di- (m = 1) oder trifunktionell (m = 0) und die Alkoxygruppe ist eine Methoxy- oder Ethoxygruppe.

Bevorzugt ist die alkoxyfunktionelle Silangruppe über eine Gruppe, wie eine weitere, andere funktionelle Gruppe (X = z.B. -S-, -OR, -NHR, -NR₂), die entweder selbst als Elektronendonor fungieren kann oder ein Atom enthält, welches als Elektronendonor fungieren kann, an das Grundgerüst gebunden, wobei die beiden funktionellen Gruppen, d.h. die weitere funktionelle Gruppe und die alkoxyfunktionellen Silangruppe über eine Methylenbrücke miteinander verbunden sind (-X-CH₂-Si(R¹)ₘ(OR²)₃₋ₘ). Hierdurch wird eine elektronische Wechselwirkung (Back-Bonding) zwischen dem Siliziumatom und dem Elektronendonor bedingt, wobei Elektronendichte vom Donor auf das Siliziumatom verschoben wird, was zu einer Schwächung der Si-O-Bindung führt, das sich wiederum in einer stark erhöhten Reaktivität der Si-Alkoxygruppen niederschlägt. Hierbei handelt es sich um den sogenannten α-Effekt. Solche Verbindungen werden auch als α-Silane bezeichnet. Daneben können aber auch sogenannte γ-Silane oder andersartige Silane verwendet werden.

Am stärksten bevorzugt handelt es sich bei den alkoxysilanfunktionellen Polymeren um Polymere, bei denen das Grundgerüst über eine Urethangruppe oder eine Ethergruppe mit Silangruppen terminiert ist, wie beispielsweise Dimethoxy(methyl)silylmethylcarbamat-terminierte Polyether, Diethoxy(methyl)silyl-methylcarbamat-terminierte Polyether, Trimethoxysilylmethylcarbamat-terminierte Polyether, Triethoxysilylmethylcarbamat-terminierte Polyether, oder Mischungen aus diesen.

Beispiele geeigneter Polymere umfassen silanterminierte Polyether (z.B. Geniosil® STP-E 10 und Geniosil® STP-E 30 von Wacker Chemie AG; MS-Polymere von Kaneka Corporation (insbesondere MS-203, MS-303, SAX260, SAX350, SAX400, SAX 220, S154, S327, S227, SAX725, SAX510, SAX520, SAX530, SAX580, SAT010, SAX015, SAX770, SAX220, SAX115, (Polyether Backbone)) und silanterminierte Polyurethane (z.B. Polymer ST61, Polymer ST75 und Polymer ST77 von Evonik Hanse, Desmoseal® S XP 2458, Desmoseal® S XP 2636, Desmoseal® S XP 2749, Desmoseal® S XP 2821 von Bayer, SPUR+*1050MM, SPUR+*1015LM, SPUR+* 3100HM, SPUR+* 3200HM von Momentive).

Als alternative Polymere können bevorzugt solche verwendet werden, bei denen die alkoxyfunktionellen Silangruppen nicht (nur) terminal in das Gerüst des Polymers eingebaut werden, sondern gezielt seitenständig verteilt über die Kette des Grundgerüstes. Über die eingebauten mehreren Vernetzungseinheiten können wichtige Eigenschaften, wie die Vernetzungsdichte, gesteuert werden. Als geeignetes Beispiel kann hier die Produktlinie TEGOPAC® der Evonik Goldschmidt GmbH genannt werden, wie TEGOPAC BOND 150, TEGOPAC BOND 250 und TEGOPAC SEAL 100 sowie GENIOSIL® XB 502, GENIOSIL® WP1 und GENIOSIL® WP2 der Wacker Chemie AG. In diesem Zusammenhang wird beispielhaft auf die DE 102008000360 A1, die DE 102009028640 A1, die DE102010038768 A1 und die DE 102010038774 A1 und verwiesen.

Das alkoxysilanfunktionelle Polymer kann auch ein Gemisch aus zwei oder mehreren der vorhergehend beschriebenen Polymeren sein, die gleichartig oder unterschiedlich sein können.

Je nach Kettenlänge des Grundgerüstes, Alkoxyfunktionalität des Polymers und Sitz der alkoxyfunktionellen Silangruppen können der Vernetzungsgrad des Bindemittels und somit sowohl die Festigkeit der entstehenden Beschichtung als auch deren elastische Eigenschaften eingestellt werden.

Gewöhnlich beträgt die Menge des Bindemittels 10 bis 70 Gew.-%, bevorzugt 15 bis 65 Gew.-%, stärker bevorzugt 20 bis 55 Gew.-%, jeweils bezogen auf die gesamte Zusammensetzung.

Erfindungsgemäß enthält die Zusammensetzung ein Vernetzungsmittel, insbesondere Wasser. Hierdurch wird eine homogenere und schnellere Durchhärtung des Bindemittels erreicht, verglichen mit einem System, welches durch die Luftfeuchtigkeit in der Umgebung aushärtet. Die Aushärtung der Zusammensetzung wird somit weitgehend unabhängig von der absoluten Luftfeuchtigkeit und die Zusammensetzung härtet auch unter extrem trockenen Bedingungen zuverlässig und schnell aus.

Der Wassergehalt in der Zusammensetzung beträgt bevorzugt zwischen 5 und 40 Gew.-%, stärker bevorzugt zwischen 10 und 30 Gew.-%, bezogen auf die gesamte Zusammensetzung.

Als Treibmittel sind alle gängigen chemischen Treibmittel geeignet, die durch chemische Reaktion zwischen zwei Bestandteilen aktiviert werden, d.h. ein Gas als eigentliches Treibmittel bilden. Dementsprechend enthält die Zusammensetzung erfindungsgemäß eine Treibmittelmischung, welche Verbindungen umfasst, die nach deren Vermischen unter Bildung von Kohlendioxid (CO₂), Wasserstoff (H₂) oder Sauerstoff (O₂) miteinander reagieren.

In einer Ausführungsform umfasst die Treibmittelmischung eine Säure und eine Verbindung, die mit Säuren unter Bildung von Kohlendioxid reagieren kann.

Als Verbindungen, die mit Säuren unter Bildung von Kohlendioxid reagieren können, können carbonat- und hydrocarbonathaltige Verbindungen, insbesondere Metall- oder (insbesondere quarternäre) Ammoniumcarbonate verwendet werden, wie Carbonate von Alkali - oder Erdalkalimetallen, zum Beispiel CaCO₃, NaHCO₃, Na₂CO₃, K₂CO₃, (NH₄)₂CO₃ und dergleichen, wobei Kreide (CaCO₃) bevorzugt ist. Dabei können verschiedene Typen von Kreiden mit unterschiedlichen Korngrößen und unterschiedlicher Oberflächenbeschaffenheit, wie beispielsweise beschichtete oder unbeschichtete Kreide, oder Mischungen von zwei oder mehreren davon verwendet werden. Bevorzugt werden beschichtete Kreidetypen verwendet, da sie langsamer mit der Säure reagieren und somit kontrolliertes Aufschäumen bzw. abgestimmte Aufschäumungs- und Aushärtezeit gewährleisten.

Als Säure kann jede saure Verbindung verwendet werden, die in der Lage ist, mit carbonat- oder hydrogecarbonathaltigen Verbindungen unter Abspaltung von Kohlendioxid zu reagieren, wie etwa Phosphorsäure, Salzsäure, Schwefelsäure, Ascorbinsäure, Polyacrylsäure, Benzoesäure, Toluolsulfonsäure, Weinsäure, Glycolsäure Milchsäure; organische Mono-, Di- oder Polycarbonsäuren, wie Essigsäure, Chloressigsäure, Trifluoressigsäure, Fumarsäure, Maleinsäure, Zitronensäure oder dergleichen, Aluminiumdihydrogenphosphat, Natriumhydrogensulfat, Kaliumhydrogensulfat, Aluminiumchlorid, Harnstoffphosphat und andere säurefreisetzende Chemikalien oder Mischungen von zwei oder mehreren davon. Die Säure erzeugt das Gas als eigentliches Treibmittel.

Als Säure-Komponente kann eine wässrige Lösung einer anorganischen und/oder organischen Säure, benutzt werden. Ferner können gepufferte Lösungen von Zitronen-, Wein-, Essig-, Phosphorsäure und dergleichen verwendet werden.

Erfindungsgemäß kann der Gehalt an Säurekomponente in der Zusammensetzung bis zu 41 Gew.-% bezogen auf das Polymer, betragen, wobei ein Gehalt im Bereich zwischen 10 und 35 Gew.-% bevorzugt, zwischen 15 und 30 Gew.-% stärker bevorzugt und zwischen 18 und 28 Gew.-% noch stärker bevorzugt ist.

In einer alternativen Ausführungsform umfasst die Treibmittelmischung Verbindungen, die bei Reaktion miteinander Wasserstoff freisetzten. Hierzu kommen Reaktionen von:
(i) einem oder mehreren unedlen Metallen (z.B. Aluminium, Eisen oder Zink) mit Basen (z.B. ein oder mehrere Alkalimetallhydroxide, wie Natrium-, Kalium- oder Lithiumhydroxid) oder mit ein oder mehreren Säuren, wie oben bei den Carbonaten definiert (vorzugsweise anorganische Säure);
(ii) Metallhydriden (z.B. Natriumhydrid oder Lithiumaluminiumhydrid) mit Wasser, oder
(iii) einer Verbindung, die Si-gebundene Wasserstoffatome aufweist (z.B. Polymethylhydrogensiloxan, bekannt auch als Polymethylhydrosiloxan, aber auch andere Polyalkyl- oder Polyarylhydrogensiloxane) mit Protonendonoren (z.B. Wasser). Geeignet sind u.a. lineare Polyhydrogensiloxane, Tetramere, Copolymere von Dimethysiloxan und Methylhydrosiloxan, Trimethylsilylterminierte Polyhydrogensiloxane, Hydrid-terminierte Polydimethylsiloxane, Triethylsilyl-terminierte Polyethylhydrosiloxane, Hydrid-terminierte Copolymere aus Polyphenylmethylsiloxan und Methylhydrosiloxan und dergleichen.

Diese Verbindungen sind bevorzugt in einer Menge von 0,1 bis 15 Gew.-%, stärker bevorzugt von 3 bis 13 Gew.-% und am stärksten bevorzugt von 4 bis 7 Gew.-%, bezogen auf die gesamte Zusammensetzung, enthalten.

In einer weiter alternativen Ausführungsform umfasst die Treibmittelmischung Verbindungen, die bei Reaktion miteinander Sauerstoff freisetzen können, wie etwa durch die Reaktion von Peroxiden (z.B. Wasserstoffperoxid oder Wasserstoffperoxid freisetzende Verbindungen, einschließlich fester Verbindungen, wie Wasserstoffperoxid-Harnstoff-Komplex und Harnstoffphosphat) mit Metalloxiden und/oder Basen.

Diese Verbindungen sind bevorzugt in einer Menge von 0,1 bis 5 Gew.-%, stärker bevorzugt von 1,5 bis 4 Gew.-% und am stärksten bevorzugt von 2 bis 3 Gew.-%, bezogen auf die gesamte Zusammensetzung, enthalten.

Erfindungsgemäß enthält die Zusammensetzung ein dämmschichtbildendes Additiv, wobei das Additiv sowohl eine einzelne Verbindung als auch ein Gemisch von mehreren Verbindungen umfassen kann.

Zweckmäßig werden als dämmschichtbildende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmter Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch physikalische Intumeszenz gebildet werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Gasbildner, die häufig in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich der Gasbildner thermisch unter Bildung inerter Gase, die ein Aufblähen des carbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildende Additiv mindestens einen Kohlenstoffgerüstbildner sofern das Bindemittel nicht als solcher verwendet werden kann, mindestens einen Säurebildner, mindestens ein Gasbildner und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Flammschutzmitteln üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, EO-PO-Polyole. Bevorzugt werden Pentaerythrit, Dipentaerythrit oder Polyvinylacetat eingesetzt.

Es sei erwähnt, dass das Polymer, welche als Bindemittel dient, im Brandfall selbst auch die Funktion eines Kohlenstofflieferanten haben kann, so dass die Zugabe eines zusätzlichen Kohlenstofflieferanten nicht immer erforderlich ist.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-Formaldehyd-Harz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Gasbildner kommen die üblicherweise in Flammschutzmitteln verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Gasbildner wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkalationsverbindung, die auch als Blähgraphit bekannt sind. Diese können ebenfalls im Bindemittel, insbesondere homogen enthalten sein.

Als Blähgraphit kommen beispielsweise bekannte Einlagerungsverbindungen von SOₓ, NOₓ, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen SO₂, SO₃, NO und/oder NO₂ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1, deren Inhalt hiermit in diese Anmeldung aufgenommen wird.

In einer weiteren Ausführungsform der Erfindung wird die isolierende Schicht sowohl durch chemische als auch durch physikalische Intumeszenz gebildet, so dass das dämmschichtbildende Additiv sowohl einen Kohlenstofflieferant, einen Dehydrierungskatalysator und ein Gasbildner als auch thermisch expandierbare Verbindungen umfasst.

Das dämmschichtbildende Brandschutzadditiv trägt zudem dazu bei, die Dichte der Schäume zu erhöhen, da hierdurch die Brandschutzeigenschaften verbessert werden können. Die Schäume haben im Allgemeinen Dichten von ca. 160-300 g/cm³, gemessen gemäß DIN EN ISO 845.

Das dämmschichtbildende Additiv kann in einer Menge von 10 bis 70 Gew.-% in der Zusammensetzung enthalten sein. Um eine möglichst hohe Intumeszenzrate zu bewirken, wird der Anteil des dämmschichtbildenden Additivs in der Gesamtformulierung so hoch wie möglich eingestellt, wobei darauf geachtet werden muss, dass die Viskosität der Zusammensetzung nicht zu hoch wird, damit sich die Zusammensetzung noch gut verarbeiten lässt. Bevorzugt beträgt der Anteil 12 bis 60 Gew.-% und besonders bevorzugt 15 bis 30 Gew.-%, bezogen auf die gesamte Zusammensetzung.

Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern.

Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von ≤50 µm, vorzugsweise von 0,5 bis 10 µm besitzt. Im Fall der Verwendung des teilchenförmigen Metalls in Form von Fasern, Fäden und/oder Whiskers ist eine Dicke von 0,5 bis 10 µm und eine Länge von 10 bis 50 µm bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere Flammschutzmittel zugesetzt werden, wie Phosphatester, halogenhaltige Verbindungen wie z.B. Tri-(2-chlorisopropyl)-phosphat (TCPP), Tris(2-ethylhexyl)phosphat, Dimethylpropanphosphonat, Triethylphosphat und dergleichen. Einige solcher Verbindungen sind beispielsweise beschrieben in S. V Levchik, E. D Weil, Polym. Int. 2004, 53, 1901-1929 beschrieben. Die Flammschutzmittel können bevorzugt in einer Menge von 3 bis 6 Gew.-%, bezogen auf die gesamte Zusammensetzung, enthalten sein.

Die erfindungsgemäße Zusammensetzung kann mindestens einen Katalysator enthalten. Hierdurch kann die Aushärtung des Bindemittels (Polymers) beschleunigt werden, wobei ein Absinken bzw. Zusammenfallen des gebildeten Schaums verhindert oder zumindest stark verlangsamt werden kann. Der Katalysator bewirkt durch die schnellere Hautbildung an der Oberfläche der aufgeschäumten Zusammensetzung auch, dass die Oberfläche über einen kürzeren Zeitraum klebrig bleibt.

Als Katalysatoren können alle Verbindungen verwendet werden, die geeignet sind, die Bildung der Si-O-Si-Bindungen zwischen den Silan-Gruppen der Polymere zu katalysieren. Beispielhaft können Metallverbindungen, wie Titanverbindungen, zum Beispiel Titanatester, wie Tetrabutyltitanat, Tetrapropyltitanat, Tetraisopropyltitanat, Tetraacetylacetonattitanat, Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxid, oder entsprechende Verbindungen des Dioctylzinn, Zinnnaphthenat Dimethylzinndineododecanoat, Reaktionsprodukte aus Dibutylzinnoxid und Phthalsäureester, Organoaluminiumverbindungen, Reaktionsprodukte aus Bismutsalzen oder Chelatverbindungen, wie Zirkoniumtetracetylacetonat, erwähnt werden.

Diese Katalysatoren können unabhängig vom gewählten Treibmittel für die Schaumbildung verwendet werden.

Sofern ein Katalysator verwendet wird, kann dieser in einer Menge bis zu 5 Gew.-%, bevorzugt von 0% bis 4 Gew.-% und stärker bevorzugt von 0% bis 0,5 Gew.-%, bezogen auf die gesamte Zusammensetzung, in der Zusammensetzungen enthalten sein.

Alternativ ist es möglich, auch andere Katalysatoren zu verwenden, insbesondere, da die vorhergenannten Katalysatoren zum Teil hinsichtlich ihrer Toxizität bedenklich sind. Hierbei handelt es sich um z.B. saure oder basische Katalysatoren. Diese Katalysatoren sind jedoch nicht unabhängig von dem Treibmittel und müssen entsprechend gewählt werden. Darüber hinaus ist zu berücksichtigen, insbesondere bei der davon einzusetzenden Menge, dass die Katalysatoren gegebenenfalls als Reaktand in der das Treibmittel bildenden Reaktion dienen können und daher verbraucht werden.

Für den Fall, dass Kohlendioxid als Treibmittel verwendet werden soll, werden als Katalysator, alternativ oder zusätzlich zu den oben genannten Metallverbindungen, saure Katalysatoren, wie Zitronensäure, Phosphorsäure- bzw. Phosphorsäureester, Toluolsulfonsäuren und andere Mineralsäuren, verwendet. Die Säure wirkt zusätzlich als Beschleuniger für die Aushärtungsreaktion des Bindemittels, in dem sie die Hydrolyse und die Kondensation von Alkoxysilangruppen beschleunigt. Die Aushärtung der Zusammensetzung wird somit weitgehend unabhängig von der absoluten Luftfeuchtigkeit und die Zusammensetzung härtet auch unter extrem trockenen Bedingungen zuverlässig und schnell aus. Hierzu eignet sich insbesondere die Toluolsulfonsäuren, welche auch ohne die Verwendung eines weiteren Katalysators eine sehr schnelle Aushärtung zur Folge haben.

Für den Fall, dass Wasserstoff als Treibmittel gebildet werden soll, können als Katalysator, alternativ oder zusätzlich zu den oben genannten Metallverbindungen, basische Katalysatoren, wie einfache Basen, z.B. NaOH, KOH, K₂CO₃, Ammoniak, Na₂CO₃, aliphatische Alkoholate oder K-Phenolat, organische Amine, wie Triethylamin, Tributylamin, Trioctylamin, Monoethanolamin, Diethanolamin, Triethanolamin, Triisopropanolamin, Tetramethylendiamin, Quadrol, Diethylentriamin, Dimethylanilin, Protonenschwamm, *N*,*N*'-Bis[2-(dimethylamino)ethyl]-*N*,*N*'-dimethylethylendiamin, *N*,*N*-Dimethylcyclohexylamin, *N*-Dimethylphenlyamin, 2-Methylpentamethylenediamin, 2-Methylpentamethylenediamin, 1,1,3,3-Tetramethylguanidin, 1,3-Diphenylguanidin, Benzamidin, *N*-Ethylmorpholin, 2,4,6-Tris(dimethylaminomethyl)phenol (TDMAMP); 1,8-Diazabicyclo[5.4.0]undec-7-en (DBU) und 1,5-Diazabicyclo(4.3.0)non-5-en (DBN); *n*-Pentylamin, *n*-Hexylamin, Di-*n-*propylamin und Ethylendiamin; DABCO, DMAP, PMDETA, Imidazol und 1-Methylimidazol oder Salze aus Aminen und Carbonsäuren und Polyetheramine, wie Polyethermonoamine, Polyetherdiamine oder Polyethertriamine, wie z.B. die Jeffamine von Huntsman und Etheramine, wie z.B. die Jeffkats von Huntsman, gegebenenfalls jeweils als (wässrige)Lösung, verwendet werden. In dieser Hinsicht wird Bezug genommen auf die Anmeldungen WO 2011/157562 A1 und WO 2013/003053 A1.

Die Art und die Menge des Katalysators werden abhängig von dem gewählten alkoxysilanfunktionellen Polymer, der gewünschten Reaktivität und des gewünschten Treibmittels gewählt.

Um dem gebildeten Schaum eine höhere Stabilität zu verleihen, müssen die gebildeten Zellen bis zur Aushärtung des Bindemittels stabil bleiben, um den Kollaps der polymeren Schaumstruktur zu verhindern. Eine Stabilisierung wird umso notwendiger, je niedriger die Dichte des Schaumstoffes sein soll, d.h. je größer die Volumenexpansion ist. Eine Stabilisierung wird gewöhnlich mittels Schaumstabilisatoren erreicht.

Sofern erforderlich kann die erfindungsgemäße Zusammensetzung daher ferner einen Schaumstabilisator enthalten. Als Schaumstabilisatoren eignen sich beispielsweise Alkylpolyglycoside. Diese sind nach dem Fachmann an sich bekannten Methoden durch Umsetzung von längerkettigen Monoalkoholen mit Mono-, Di- oder Polysacchariden erhältlich. Die längerkettigen Monoalkohole, die gegebenenfalls auch verzweigt sein können, weisen bevorzugt 4 bis 22 C-Atome, bevorzugt 8 bis 18 C-Atome und besonders bevorzugt 10 bis 12 C-Atome in einem Alkylrest auf. Im Einzelnen genannt seien als längerkettige Monoalkohole 1-Butanol, 1-Propanol, 1-Hexanol, 1-Oktanol, 2-Ethylhexanol, 1-Decanol, 1-Undecanol, 1-Dodecanol (Laurylalkohol), 1 -Tetradecanol (Myristylalkohol) und 1- Octadecanol (Stearylalkohol). Es können auch Gemische der genannten längerkettigen Monoalkohole eingesetzt werden. Weitere Schaumstabilisatoren umfassen an sich bekannte anionische, kationische, amphotere und nichtionische Tenside sowie Mischungen hieraus. Bevorzugt werden Alkylpolyglycoside, EO/PO-Blockcopolymere, Alkyl- oder Arylalkoxylate, Siloxanalkoxylate, Ester der Sulfobernsteinsäure und/oder Alkali- oder Erdalkalimetallalkanoate eingesetzt. Besonders bevorzugt werden EO/PO-Blockcopolymere eingesetzt.

Die Schaumstabilisatoren können in irgendeiner der Komponenten der erfindungsgemäßen Zusammensetzung enthalten sein, so lange diese nicht miteinander reagieren.

Ferner kann die Zusammensetzung ein weiteres Vernetzungsmittel (Co-Vernetzungsmittel) enthalten. Hierdurch können verschiedene Eigenschaften, wie Haftung zum Untergrund, bessere Benetzung der Additive und Aushärtungsgeschwindigkeit der Zusammensetzung gezielt optimiert und maßgeschneidert werden.

Geeignete weitere Vernetzungsmittel (Co-Vernetzungsmittel) sind unter einem reaktiven Alkoxysilan oder einem oligomeren organofunktionellen Alkoxysilan ausgewählt. Bevorzugt ist das weitere Vernetzungsmittel ein oligomeres vinylfunktionelles Alkoxysilan, ein oligomeres amino-/alkylfunktionelles Alkoxysilan, ein oligomeres aminofunktionelles Alkoxysilan, ein aminofunktionelles Alkoxysilan, ein alkylfunktionelles Alkoxysilan, ein epoxyfunktionelles Alkoxysilan, ein vinylfunktionelles Alkoxysilan, ein vinyl-/alkylfunktionelles Alkoxysilan, ein mercaptofunktionelles Alkoxysilan, ein methacrylfunktionelles Alkoxysilan oder ein Kieselsäureester.

Geeignete weitere Vernetzungsmittel sind beispielsweise: Hexadecyltrimethoxysilan, *iso*-Butyltriethoxysilan, *iso*-Butyltrimethoxysilan, Methyltriethoxysilan, Methyltrimethoxysilan, Octyltrichlorosilan, Octyltriethoxysilan, Propyltriethoxysilan, Propyltrimethoxysilan, Bis(3-triethoxysilylpropyl)amin, Bis(3-trimethoxysilylpropyl)amin, 3-Aminopropylmethyldiethoxysilan, 3-Aminopropyltriethoxysilan, 3-Aminopropyltrimethoxysilan, 2-Aminoethyl-3-amino-propylmethyldimethoxysilan, 2-Aminoethyl-3-amino-propyltrimethoxysilan, 3-Glycidyloxypropyltriethoxysilan, 3-Glycidyloxypropyltrimethoxysilan, 3-Mercaptoprobyltrimethoxysilan, 3-Methacryloxypropyltrimethoxysilan, Methacryloxymethyl-methyldimethoxysilan, Methacryloxymethyl-timethoxysilan, 3-Methacryloxypropyltriacetoxysilan, Ethylpolysilicat, Tetraethylorthosilicat, Tetramethylorthosilicat, Tetra-n-Propylorthosilicat, Vinyltrichlorsilan, Vinyltriethoxysilan, Vinyltrimethoxysilan, Vinyltriacetoxysilan, Vinyltris(2-methoxyethoxy)silan, *N-*Cyclohexylaminomethyltriethoxysilan, Cyclohexyl-3-aminopropyltrimethoxysilan, *N*-(2-Aminoethyl)-3-aminopropyltrimethoxysilan, 3-(2-Aminomethylamino)propyltriethoxysilan, *N*-(2-Aminoethyl)-3-amino-prolymmethyldimethoxysilan, 3-Ureidopropyltrimethoxysilan, *N*-Methyl[3-(Trimethoxysilyl)propyl]carbamat, *N*-Trimethoxysilylmethyl-O-methylcarbamat, *N-*Dimethoxy(methyl)silyl-methyl-O-methylcarbamat, Tris-[3-(trimethoxysilyl)propyl]-isocyanurat oder Kombinationen aus diesen.

Sofern ein weiteres Vernetzungsmittel (Co-Vernetzungsmittel) verwendet wird, kann dieses einzeln oder als Gemisch von mehreren bis zu einer Menge von 10 Gew.-%, bevorzugt bis zu 7 Gew.-% und stärkster bevorzugt bis zu 5 Gew.-%, bezogen auf die gesamte Zusammensetzung, enthalten sein.

In einer Ausführungsform enthält die erfindungsgemäße Zusammensetzung ferner mindestens einen weiteren Bestandteil, ausgewählt unter Weichmachern, Vernetzungsmitteln, Wasserfängern, organischen und/oder anorganischen Zuschlagstoffen und/oder weiteren Additiven enthält.

Der Weichmacher hat die Aufgabe, das ausgehärtete Polymernetzwerk weich zu machen. Ferner hat der Weichmacher die Aufgabe, eine zusätzliche flüssige Komponente einzubringen, so dass die Füllstoffe vollständig benetzt werden und die Viskosität so eingestellt wird, dass die Beschichtung verarbeitungsfähig wird. Der Weichmacher kann in solch einer Menge in der Zusammensetzung enthalten sein, dass er die eben beschriebenen Funktionen hinreichend erfüllen kann.

Geeignete Weichmacher sind unter Derivaten der Benzoesäure, Phthalsäure, z.B. Phthalate, wie Dibutyl-, Dioctyl-, Dicyclohexyl-, Diisooctyl-, Diisodecyl-, Dibenzyl- oder Butylbenzylphthalat, Trimellitsäure, Pyromellitsäure, Adipinsäure, Sebacinsäure, Fumarsäure, Maleinsäure, Itaconsäure, Caprylsäure und Zitronensäure, Alkylphosphatestern und Derivaten von Polyestern und Polyethern, epoxidierten Ölen, C₁₀-C₂₁-Alkylsulfonsäureestern des Phenols und Alkylestern ausgewählt. Bevorzugt ist der Weichmacher ein Esterderivat der Terephthalsäure, ein Triol-Ester der Caprylsäure, ein Glykoldiester, Diol-Ester aliphatischer Dicarbonsäuren, Esterderivat der Zitronensäure, sekundärer Alkylsulfonsäureester, Esterderivate des Glycerin mit Epoxidgruppen und Esterderivate der Phosphate. Stärker bevorzugt ist der Weichmacher Bis(2-ethylhexyl)terephthalat, Trihydroxymethylpropylcaprylat, Triethylenglycol-bis(2-ethylhexanoat), 1,2-Cyclohexandicarboxylsäure-diisononylester, ein Gemisch aus 75-85 % sekundärer Alkylsulfonsäureester, 15-25 % sekundärer Alkandisulfonsäurediphenylester sowie 2-3 % nicht sulfonierter Alkane, Triethylcitrat, epoxidiertes Sojabohnenöl, Tri-2-ethylhexylphosphat oder ein Gemisch aus *n*-Octyl-und *n*-Decylsuccinat. Am stärksten bevorzugt ist der Weichmacher ein Phosphatester, da diese sowohl als Weichmacher als auch als Flammschutzmittel wirken können.

In der Zusammensetzung kann der Weichmacher bevorzugt in einer Menge bis zu 40 Gew.-%, weiter bevorzugt bis zu 35 Gew.-% und stärker bevorzugt bis zu 15 Gew.-%, bezogen auf die gesamte Zusammensetzung, enthalten sein.

Um eine vorzeitige Reaktion des alkoxysilanfunktionellen Polymers mit Restfeuchtigkeit aus gegebenenfalls in der Zusammensetzung enthaltenen Bestandteilen, insbesondere Füllstoffen und/oder Additiven, oder der Luftfeuchtigkeit zu verhindern, werden der Zusammensetzung üblicherweise Wasserfänger zugesetzt. Dadurch wird in die Formulierungen eingetragene Feuchtigkeit abgefangen. Bevorzugt ist der Wasserfänger ein organofunktionelles Alkoxysilan oder ein oligomeres organofunktionelles Alkoxysilan, stärker bevorzugt ein vinylfunktionelles Alkoxysilan, ein oligomeres vinylfunktionelles Alkoxysilan, ein vinyl-/alkylfunktionelles Alkoxysilan, ein oligomeres amino-/alkylfunktionelles Alkoxysilan, ein acetoxy-/alkylfunktionelles Alkoxysilan, ein aminofunktionelles Alkoxysilan, ein oligomeres aminfunktionelles Alkoxysilan, ein Carbamatosilan, ein Arylalkoxysilan oder ein methacryloxyfunktionelles Alkoxysilan. Am stärksten bevorzugt ist der Wasserfänger Di-*tert*-butoxydiacetoxysilan, Bis(3-triethoxysilylpropyl)amin, Bis(3-trimethoxypropyl)amin, 3-Aminopropylmethyldiethoxysilan, 3-Aminopropyltriethoxysilan, Vinyltriethoxysilan, Vinyltrimethoxysilan, Vinyltris(2-methoxyethoxy)silan, *N-*Cyclohexylaminomethyltriethoxysilan, Vinyldimethoxymethylsilan, Vinyltriacetoxysilan, 3-Methacryloxypropyltrimethoxysilan, Methacryloxymethyl-methyldimethoxysilan, Methacryloxymethyltrimethoxysilan, 3-Methacryloxypropyltriacetoxysilan, *N*-Methyl[3-(Trimethoxysilyl)propyl]carbamat, *N*-Trimethoxysilylmethyl-*O*-methylcarbamat, *N-*Dimethoxy(methyl)silyl-methyl-O-methylcarbamat, Phenyltrimethoxysilan oder Kombinationen aus diesen.

Die zugesetzte Menge an Wasserfänger richtet sich nach dem Wassergehalt der Bestandteile der Formulierung, ausgenommen dem extra zugegeben Wasser (Bestandteil B) und liegt üblicherweise im Bereich bis zu 4 Gew. %. Die Wasserfänger können in einer Menge von 0,1 bis 4 Gew.-%, bevorzugt von 0,8 bis 3 Gew.-% und stärker bevorzugt von 0,8 bis 2,5 Gew.-%, bezogen auf die gesamte Zusammensetzung, enthalten sein.

Die Zusammensetzung kann neben den bereits beschriebenen Additiven gegebenenfalls übliche Hilfsmittel wie Netzmittel, etwa auf Basis von Polyacrylaten und/oder Polyphosphaten, Farbstoffe, Fungizide, oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive, wie Verdicker und/oder Rheologieadditive, sowie Füllstoffe können der Zusammensetzung zugegeben werden. Als Rheologieadditive, wie AntiAbsetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan Gummi.

Die erfindungsgemäße Zusammensetzung kann als Zwei- oder MehrkomponentenSystem konfektioniert sein, wobei der Begriff Mehrkomponentensystem auch Zweikomponentensysteme mit umfasst. Die Zusammensetzung ist bevorzugt als Zweikomponenten-System konfektioniert, in dem die einzelnen Bestandteile der Treibmittelmischung vor der Verwendung der Zusammensetzung reaktionsinhibierend voneinander getrennt sind und das Vernetzungsmittel vor der Verwendung der Zusammensetzung reaktionsinhibierend von dem alkoxysilanfunktionellen Polymer getrennt ist. Die weiteren Bestandteile der Zusammensetzung sind entsprechend ihrer Verträglichkeit untereinander und mit den in der Zusammensetzung enthaltenen Verbindungen aufgeteilt und können in einer der beiden Komponenten oder in beiden Komponenten enthalten sein. Ferner kann die Aufteilung der weiteren Bestandteile, insbesondere der festen Bestandteile davon abhängen, in welchen Mengen diese in der Zusammensetzung enthalten sein soll. Durch entsprechende Aufteilung kann sich gegebenenfalls ein höherer Anteil, bezogen auf die gesamte Zusammensetzung ergeben. Das Brandschutzadditiv kann dabei als Gesamtmischung oder in Einzelkomponenten aufgeteilt in einer Komponente oder mehreren Komponenten enthalten sein. Die Aufteilung erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig.

Gegenstand der Erfindung ist ferner die Verwendung einer erfindungsgemäßen Zusammensetzung zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke des Brandschutzes.

Gegenstand der Erfindung ist ferner ein Verfahren zur Herstellung Schaumstoffherstellung, bei dem die Komponenten eines vorbeschriebenen Schaumstoffsystems am oder nahe am Anwendungsort miteinander vermischt werden und die Mischung am gewünschten Ort, beispielsweise in eine Spalte, in einen Hohlraum oder auf eine Fläche, ein- oder aufgebracht wird. Hierbei handelt es sich um sogenannte Ortschäume.

Gegenstand der Erfindung sind ferner Formkörper, die durch das eben beschriebene Verfahren erhältlich sind, wobei die Schaumstoffherstellung beispielsweise in einer Form erfolgen kann. Denkbar ist hier die Verwendung eines Formkörpers zur Herstellung von Formkörpern, die in Maueröffnungen, z.B. Kabelschotte, eingesetzt werden. Bevorzugt ist auch die Verwendung für Kabel-, Rohr-, Stromschienen- und/oder Fugenabschottungen. Sie können auch bevorzugt als Dichtungen zum Brandschutz und zur Herstellung von Brandschutzklebmassen, zum Beschichtung von Oberflächen und zur Herstellung von Sandwichbauteilen oder Verbundplatten verwendet werden.

Die Formkörper schäumen im Brandfall auf und so wird eine Flammenausbreitung verhindert und sind somit als Dichtelemente, Sicherungsvorrichtungen, Brandsperren oder Verkleidungen geeignet. Man kann diese somit als Verfugungen, Verschlüsse für Kabeldurchbrüche, zum Verschließen von Maueröffnungen verwenden. Auch die Verwendung eines Brandschutzelements als Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten.

Die Erfindung wird nachstehend anhand einiger Beispiele näher erläutert

### AUSFÜHRUNGSBEISPIELE

Es werden jeweils die in den Beispielen 1 und 2 aufgelisteten Einzelkomponenten vermengt und homogenisiert. Für die Anwendung werden diese Mischungen mechanisch in einem Behälter miteinander vermischt bis homogene Vermischung erreicht wurde und bis das Schäumen anfing.

Die Brandschutzeigenschaften der so erhaltenen Zusammensetzungen wurden mittels makro-thermomechanischer Analyse mit einem Gerät Makro-TMA 2 (entwickelt und gebaut von Hilti (HEG) & ASG (Analytik-Service Gesellschaft in Augsburg) bestimmt, Hierzu wurde jeweils eine runde Probe mit Durchmesser d = 45 mm ausgeschnitten. Die Proben wurden jeweils mit einer Auflast von 100 g und einer Aufheizrate von 15 K/min auf 650 °C geheizt. Die Stabilität von somit erhaltener Aschenkruste wurde mit einem Texture Analyzer (CT3 von Brookfield) bestimmt. Dafür wurde die Probe mit einem T7-Element mit einer konstanten Geschwindigkeit von 0.5 mm/s penetriert. Die darauf verwendete Kraft wurde als Funktion der Penetrationstiefe gemessen. Je höher die Kraft, desto härter die Aschenkruste.

### Beispiel 1 - Schaumstoffsystem durch Wasserstoffentwicklung geschäumt

| Bestandteil | Menge [Gew.-%] |
|---|---|
| Polymethylhydrogensiloxan ¹⁾ | 5,9 |
| Tri-(2-chlorisopropyl)-phosphat ²⁾ | 3,4 |
| aliphatisches silanterminiertes Präpolymer ³⁾ | 58,6 |
| Basische Lösung ⁴⁾ | 8,8 |
| Blähgraphit ⁵⁾ | 9,4 |
| Ammoniumpolyphosphat ⁶⁾ | 5,7 |
| Aluminiumtrihydrat ⁷⁾ | 1,9 |
| Monopentaerytrithol ⁸⁾ | 1,5 |
| Eisenoxid (Fe₂O₃) ⁹⁾ | 0,9 |
| Calciumcarbonat ¹⁰⁾ | 3,2 |
| Quarzmehl ¹¹⁾ | 0,5 |
| pyrogene Kieselsäure ¹²⁾ | 0,1 |
| quellfähiges Schichtsilikat ¹³⁾ | 0,1 |

| | |
|---|---|
| ¹⁾ Polymethylhydrogensiloxan; VWR; Artikelnummer 818063 ²⁾ Levagard® PP (Fa. Lanxess); Viskosität bei 20°C: <100mPas ³⁾ Desmoseal S XP- 2821 (Fa. Bayer); ⁴⁾ aus 7,4 Gew.-% Leitungswasser und 1,3 Gew.-% Natriumhydroxid-Plätzchen, wobei die Mengen jeweils bezogen auf das Gesamtgewicht der Zusammensetzung sind ⁵⁾ Nord-Min® 351 der Nordmann-Rassmann, Hamburg, Deutschland; ⁶⁾ Exolit® AP 422 der Clairant; durchschnittliche Teilchengröße ~15 µm ⁷⁾ ATH HN-434 der J.M. Huber Corporation, Finnland) ⁸⁾ Charmor® PM 40 der Perstorp Specialty Chemicals AB; Partikelgröße <40 µm; Wassergehalt 0,1% ⁹⁾ Bayferrox 130 M der Lanxess ¹⁰⁾ OMYACARB® 5SV der ¹¹⁾ MILLISIL® W12 der Quarzsandwerke GmbH; mittlere Korngröße 16 µm ¹²⁾ CAB-O-SIL® TS-720 der Cabot Corporation ¹³⁾ OPTIGEL® WX der Byk Chemie GmbH | |

### Beispiel 2 - Schaumstoffsystem durch Kohlendioxid geschäumt

| Bestandteil | Menge |
|---|---|
| Aliphatisches silanterminiertes Prepolymer I ¹⁾ | 22,0 |
| Aliphatisches silanterminiertes Präpolymer II ²⁾ | 22,0 |
| Triethylphosphat ³⁾ | 4,4 |
| Vinyltrimethoxysilan ⁴⁾ | 2,1 |
| Leitungswasser | 11,3 |
| Calciumcarbonat ⁵⁾ | 5,9 |
| Tensid ⁶⁾ | 0,5 |
| Zitronensäure, wasserfrei ⁷⁾ | 12,5 |
| Blähgraphit ⁸⁾ | 8,6 |
| Ammoniumpolyphosphat ⁹⁾ | 5,3 |
| Aluminiumtrihydrat ¹⁰⁾ | 1,8 |
| Monopentaerytrithol ¹¹⁾ | 1,4 |
| Eisenoxid (Fe₂O₃) ¹²⁾ | 0,8 |
| Dioctylzinndiketanoat ¹³⁾ | 0,3 |
| p-Toluolsulfonsäure ¹⁴⁾ | 0,5 |
| Xanthan ¹⁵⁾ | 0,2 |
| Pyrogene Kieselsäure ¹⁶⁾ | 0,4 |

| | |
|---|---|
| ¹⁾ Desmoseal S XP- 2821 der Bayer AG; ²⁾ Desmoseal S XP-2749 der Bayer AG ³⁾ Levagard® TEP-Z der Lanxess; Viskosität bei 20°C: <1,7 mPas ⁴⁾ Geniosil® XL 10 der Wacker, Viskosität, dynamisch bei 25°C 0,6 mPas; Dichte 25°C 0,97 g/cm3 ⁵⁾ OMYABOND 520-OM der Omya ⁶⁾ Glucopon 215 UP von BASF ⁷⁾ Citronensäure Anhydrat F6000 (CAS Nr. 77-92-9) von BCD Chemie ⁸⁾ Nord-Min® 351 der Nordmann-Rassmann, Hamburg, Deutschland; ⁹⁾ Exolit® AP 462 der Clairant; mikroverkapselt mit Melaminharz ¹⁰⁾ ATH HN-434 der J.M. Huber Corporation, Finnland) ¹¹⁾ Charmor® PM 40 der Perstorp...; Partikelgröße <40 µm; Wassergehalt 0,1% ¹²⁾ Bayferrox 130 M der Lanxess ¹³⁾ TIB KAT 223 der TIB Chemicals, Mannheim, Deutschland ¹⁴⁾ p-Toluolsulfonsäure-Monohydrat CAS-Nummer 6192-52-5 der Sigma-Aldrich ¹⁵⁾ Xanthan der Kremer Pigmente, Artikelnummer 63450 ¹⁶⁾ Cab-O-Sil TS-720 der Cabot | |

### Vergleichsbeispiel

Als Vergleich diente das Produkt CP660 der Firma Hilti, ein PU-basierter Brandschutzschaum.

**Tabelle 1: Ergebnisse der Bestimmung der Aschekrustenstabilität**

| | Fₘₐₓ, mN |
|---|---|
| Vergleichsbeispiel | 4791 |
| Beispiel 1 | 6039 |
| Beispiel 2 | 3266 |

Wie aus Tabelle 1 zu entnehmen ist, liefern die erfindungsgemäßen Zusammensetzungen eine feste Aschekruste, wobei die mit Kohlendioxid geschäumte Zusammensetzung eine härtere Aschekruste ergibt als die des kommerziell erhältlichen Produkts CP 660.

### Beispiel 3 - Schaumstoffsystem durch Kohlendioxid geschäumt; Brandtest

Um beurteilen zu können, ob sich die erfindungsgemäßen Zusammensetzungen als Brandschutzabschottungen eignen, wurde eine Zusammensetzung aus den nachfolgend aufgelisteten Bestandteilen in eine handelsübliche 2K-Kartusche mit einem Mischungsverhältnis von 3:1 gefüllt und zur Anwendung über einen Statikmischer ausgebracht. Dabei lagen die jeweiligen Bestandteile der Treibmittelkomponenten getrennt voneinander und die Co-Vernetzer getrennt von den Polymeren vor.

Es wurde ein Brandtest für Kabeldurchführungen nach EN 1366-3 (Annex B) durchgeführt. Hierzu wurde eine Porenbetonwand mit vier Öffnungen von 20x20 cm und 15 cm Tiefe, mit folgenden Durchführungen: C- und E-Kabel und ein Leerrohr (d = 32 cm) genommen. Der zu testende Schaum sowie ein kommerziell erhältliches Produkt wurden in die Öffnungen gebracht und in einem Brandtest 90 min getestet.. Auf der Nicht-Feuerseite wurde die Temperatur auf der Oberfläche von Schaum, den einzelnen Kabeln und dem Rohr gemessen. Die Zeit, bei der die Temperatur die Raumtemperatur um 180 °C übersteigt (T-Rating) ist aufgeschrieben für einzelne Penetrationselemente. OK bedeutet die T < 180 °C während des gesamten Tests.

| **Bestandteil** | **Menge** |
|---|---|
| **Komponente A** | |
| Aliphatisches silanterminiertes Präpolymer I ¹⁾ | 22,6 |
| Aliphatisches silanterminiertes Präpolymer II ²⁾ | 22,6 |
| Tri-(2-chlorisopropyl)-phosphat ³⁾ | 4,3 |
| Silicon-Glykol-Copolymer ⁴⁾ | 0,2 |
| Dioctylzinndiketanoat ⁵⁾ | 0,2 |
| Glasfaserkurzschnitt ⁶⁾ | 1,1 |
| Calciumcarbonat ⁷⁾ | 3,0 |
| Kreide ⁸⁾ | 0,6 |
| Blähgraphit ⁹⁾ | 9,9 |
| Ammoniumpolyphosphat ¹⁰⁾ | 6,1 |
| Aluminiumtrihydrat ¹¹⁾ | 2,1 |
| Monopentaerytrithol ¹²⁾ | 1,5 |
| Eisenoxid (Fe₂O₃) ¹³⁾ | 0,9 |

| **Komponente B** | |
|---|---|
| Zitronensäure, wasserfrei ¹⁴⁾ | 13,8 |
| Leitungswasser | 9,2 |
| Apfelpektin ¹⁵⁾ | 0,5 |
| Titandioxid ¹⁶⁾ | 0,3 |
| Monopentaerythrit ¹²⁾ | 0,3 |
| Melamin ¹⁷⁾ | 0,3 |
| Ammoniumpolyphosphat ¹⁰⁾ | 0,5 |

| | |
|---|---|
| ¹⁾ Desmoseal S XP 2821 der Bayer AG; ²⁾ Desmoseal S XP 2749 der Bayer AG ³⁾ Levagard® PP (Fa. Lanxess); Viskosität bei 20°C: <100mPas ⁴⁾ DABCO DC 198 der Air Products ⁵⁾ TIB KAT 223 der TIB Chemicals, Mannheim, Deutschland ⁶⁾ FGCS 70-30/3 der STW ⁷⁾ Socal® 322 der SpecialChem ⁸⁾ Omyacarb 5-SV ⁹⁾ Nord-Min® 351 der Nordmann-Rassmann, Hamburg, Deutschland; ¹⁰⁾ Exolit® AP 422 der Clariant; durchschnittliche Teilchengröße ~15 µm ¹¹⁾ ATH HN-434 der J.M. Huber Corporation, Finnland) ¹²⁾ Charmor® PM 40 der Perstorp...; Partikelgröße <40 µm; Wassergehalt 0,1% ¹³⁾ Bayferrox 130 M der Lanxess ¹⁴⁾ der Sigma Aldrich (CAS Nr. 77-92-9) ¹⁵⁾ Pectin der Sigma Aldrich, (CAS Nr. 9000-69-5) ¹⁶⁾ der Kronos Inc. ¹⁷⁾ Melamine der OCI Melamine | |

**Tabelle 2: Ergebnisse aus dem Brandtest**

| | **Beispiel 3** | **Vergleichsbeispiel** |
|---|---|---|
| 1. Leerrohr | **OK** | **OK** |
| 2. C-Kabel | 68 min | 63 min |
| 3. E-Kabel | 73 min | 74 min |
| 4. Schaumoberfläche | **OK** | **OK** |

Aus Tabelle 2 ist zu entnehmen, dass der Schaum aus der erfindungsgemäßen Zusammensetzung einen besseren Brandschutz liefert als der Schaum aus dem kommerziell erhältlichen Produkt.

Anhand der Beispiele konnte gezeigt werden, dass sich die erfindungsgemäßen Zusammensetzungen hervorragend als Brandschutzschäume eigenen.

## Patentansprüche

1. Schäumbare, dämmschichtbildende Mehrkomponenten-Zusammensetzung mit mindestens einem alkoxysilanfunktionellen Polymer, welches terminiert und/oder als Seitengruppen entlang der Polymerkette alkoxyfunktionelle Silangruppen der allgemeinen Formel (I) aufweist
-Si(R¹)ₘ(OR²)₃₋ₘ (I),
worin R¹ für einen linearen oder verzweigten C₁-C₁₆-Alkylrest, R² für einen linearen oder verzweigten C₁-C₆-Alkylrest und m für eine ganze Zahl von 0 bis 2 steht, mit mindestens einem dämmschichtbildenden Brandschutzadditiv, mit einer Treibmittelmischung und mit einem Vernetzungsmittel,
wobei die einzelnen Bestandteile der Treibmittelmischung vor der Verwendung der Zusammensetzung reaktionsinhibierend voneinander getrennt sind und das Vernetzungsmittel vor der Verwendung der Zusammensetzung reaktionsinhibierend von dem alkoxysilanfunktionellen Polymer getrennt ist.

2. Zusammensetzung nach Anspruch 1, wobei die Treibmittelmischung Verbindungen umfasst, die nach deren Vermischen unter Bildung von Kohlendioxid (CO₂), von Wasserstoff (H₂) oder von Sauerstoff (O₂) miteinander reagieren.

3. Zusammensetzung nach Anspruch 0, wobei die Treibmittelmischung eine Säure und eine Verbindung, die mit Säuren unter Bildung von Kohlendioxid reagieren kann, umfasst.

4. Zusammensetzung nach Anspruch 0, wobei die Treibmittelmischung eine Base und eine Verbindung, die Si-gebundene Wasserstoffatome aufweist, umfasst.

5. Zusammensetzung nach einem der vorhergehenden Ansprüche, wobei das Polymer ein Grundgerüst umfasst, das aus der Gruppe, bestehend aus einer Alkylkette, einem Polyether, Polyester, Polyetherester, Polyamid, Polyurethan,
Polyesterurethan, Polyetherurethan, Polyetheresterurethan, Polyamidurethan, Polyharnstoff, Polyamin, Polycarbonat, Polyvinylester, Polyacrylat, Polyolefin, Polyisobutylen, Polysulfid, Kautschuk, Neopren, Phenolharz, Epoxidharz und Melamin, ausgewählt ist.

6. Zusammensetzung nach einem der vorhergehenden Ansprüche, wobei das alkoxysilanfunktionelle Polymer mindestens zwei alkoxyfunktionelle Silangruppen trägt.

7. Zusammensetzung nach einem der vorhergehenden Ansprüche, wobei das Vernetzungsmittel Wasser oder ein wasserhaltiger Bestandteil ist.

8. Zusammensetzung nach einem der vorhergehenden Ansprüche, wobei das dämmschichtbildende Brandschutzadditiv mindestens eine thermisch expandierbare Verbindung und/oder ein Gemisch, das mindestens einen Dehydrierungskatalysator, mindestens ein Gasbildner und gegebenenfalls mindestens einen Kohlenstofflieferant enthält, umfasst.

9. Zusammensetzung nach Anspruch 0, wobei das Brandschutzadditiv ferner einen Aschekrustenstabilisator enthält.

10. Zusammensetzung nach einem der vorhergehenden Ansprüche, wobei die Zusammensetzung ferner ein weiteres Vernetzungsmittel (Co-Vernetzungsmittel) enthält.

11. Zusammensetzung nach einem der vorhergehenden Ansprüche, wobei die Zusammensetzung ferner einen Katalysator enthält.

12. Zusammensetzung nach Anspruch 0, wobei der Katalysator unter Metallverbindungen, sauren oder basischen Verbindungen ausgewählt ist.

13. Zusammensetzung nach Anspruch 0 oder 12, wobei der Katalysator unter Aminverbindungen ausgewählt ist.

14. Zusammensetzung nach einem der vorhergehenden Ansprüche, wobei die Zusammensetzung ferner mindestens einen weiteren Bestandteil enthält, der aus der Gruppe bestehend aus Weichmachern, Wasserfängern, anorganischen Füllstoffen und/oder weiteren Additiven ausgewählt ist.

15. Verwendung einer Zusammensetzung nach einem der Ansprüchen 1 bis 14 zum Ausschäumen von Öffnungen, Kabel- und Rohrdurchführungen in Wänden, Böden und/oder Decken, von Fugen zwischen Decken und Wandteilen, zwischen Maueröffnungen und einzubauenden Konstruktionsteilen, wie Fenster- und Türstöcken, zwischen Decken und Wänden und zwischen Außenwänden und vorgehängten Fassaden von Gebäuden zum Zwecke des Brandschutzes.

16. Formkörper erhalten aus einer Zusammensetzung nach einem der Ansprüche 1 bis 14, wobei die jeweiligen Komponenten miteinander vermischt und die Mischung in einer Form aufgeschäumt werden.
